(19) Europäisches Patentamt

European Patent Office

Office européen des brevets

(11) EP 0 920 944 A2

(12) EUROPEAN PATENT APPLICATION

(43) Date of publication:
09.06.1999 Bulletin 1999/23

(51) Int. Cl.⁶: B23H 7/06

(21) Application number: 98309886.4

(22) Date of filing: 02.12.1998

(84) Designated Contracting States:
AT BE CH CY DE DK ES FI FR GB GR IE IT LI LU
MC NL PT SE
Designated Extension States:
AL LT LV MK RO SI

(30) Priority: 03.12.1997 JP 34735097

(71) Applicant: FANUC LTD
Minamitsuru-gun, Yamanashi 401-0597 (JP)

(72) Inventor: Kinoshita, Mitsuo
Hachiouji-shi, Tokyo 192-0371 (JP)

(74) Representative:
Billington, Lawrence Emlyn et al
Haseltine Lake & Co.
Imperial House
15-19 Kingsway
London WC2B 6UD (GB)

(54) Wire discharge machining control device with offset correction feature

(57) An offset change quantity ($\Delta R$) is calculated, in a horizontal plane, every given drive control period, based on a horizontal wire movement command (U, V) and the perpendicular clearance (H) between an upper wire guide and a lower wire guide. Then, correction quantities ($\Delta\Delta X$, $\Delta\Delta Y$) for each control period are found from this change quantity ($\Delta R$), and are superimposed as a correction value on the horizontal work movement command. Accordingly, part shapes can be accurately reproduced, as given by a program, maintaining appropriate offset quantities, even in cases where taper machining is performed while varying the angle of inclination of the wire.

Fig. 5

UPPER GUIDE
DISPLACEMENT VECTOR (U,V)

CORRECTION VECTOR
($\Delta$X,$\Delta$Y)

H DISTANCE
BETWEEN GUIDES

CORRECTION VECTOR
($\Delta$X,$\Delta$Y)

3a: CORRECTED WIRE ELECTRODE POSITION

EP 0 920 944 A2

## Description

This invention relates to a wire discharge machining control device having an offset correction feature, for performing taper machining.

Well known are wire electrical discharge machines wherein, while feeding work in horizontal directions by moving a table on which the work is placed along X and Y axes, in performing overall contour machining, an inclination is imparted to the wire by moving an upper wire guide or lower wire guide supporting the wire horizontally along U and V axes, and taper machining is performed at the cut faces of the work. Ordinarily, the U axis parallels the X axis and the V axis parallels the Y axis.

Shapes to be contour-machined and angles of taper at the cut faces are given in advance by a program. The wire discharge machining control device translates this program at the actual machining stage, and controls servo motor drives after determining work movement amounts for performing the contour machining given by the program, based on speed signals from a electric discharge machining power supply, that is, the amounts of horizontal movement of the table along the X and Y axes, and determining horizontal movement amounts for either the upper wire guide or lower wire guide in order to achieve the taper angle given by the program, that is, the amounts of movement along the U and V axes.

In actually performing the machining, the wire must be moved along while maintaining a prescribed distance from the programmed machining shape, taking wire diameter, discharge gap, and amount of finish into consideration. The distance between this instructed program shape and the actual wire electrode center path is called offset amount. More specifically, this offset amount is such that it is given by the horizontal clearance between the machining shape contour and the wire, and the numerical value of which is set prior to machining by a manual data input device (MDI).

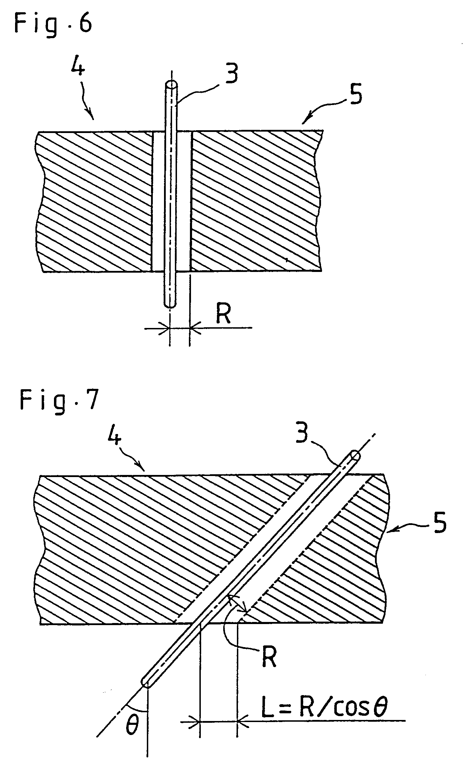

In Fig. 6 and 7 are given an example of an offset in wire discharge machining. Fig. 6 diagrams the offset amount R for a wire 3 when performing straight machining for cutting a machining shape 5 from work 4. In this case, the machining may be performed by shunting the wire 3 to the outside of the machining shape 5 by the offset amount R, taking wire diameter, discharge gap, and amount of finish into consideration.

However, as discussed already, this offset amount R is given as the horizontal clearance between the contour of the machining shape 5 and the wire 3. Therefore, when taper machining is performed, as illustrated in Fig. 7, if the value of R as described above is input as is, a problem arises in that the actual perpendicular clearance between the inclined surface of the machining shape 5 and the wire 3 is made shorter than the truly required value R.

More specifically, in order to maintain the actual perpendicular clearance between the inclined surface of the machining shape 5 and the wire 3 at R, the actual horizontal clearance between the inclined surface of the machining shape 5 and the wire 3 must be made $L = R/\cos\theta$, as illustrated in Fig. 7. In other words, taking $\theta$ as the angle of inclination of the wire used in taper machining, the offset amount L must be made equal to $R/\cos\theta$.

One conceivable way of resolving this problem is to find the offset amount L in the horizontal dimension based on the relationship between the perpendicular clearance R actually required and the programmed taper angle $\theta$, and set that value instead of R.

However, the offset amounts that can be corrected by this method are limited to cases where the work 4 is fed along while maintaining the angle of inclination of the wire 3 constant. In actual practice, however, in many cases where wire discharge machining is applied to taper machining, taper machining is performed while varying the angle of inclination of the wire 3, as with pyramids, after which the part is extricated.

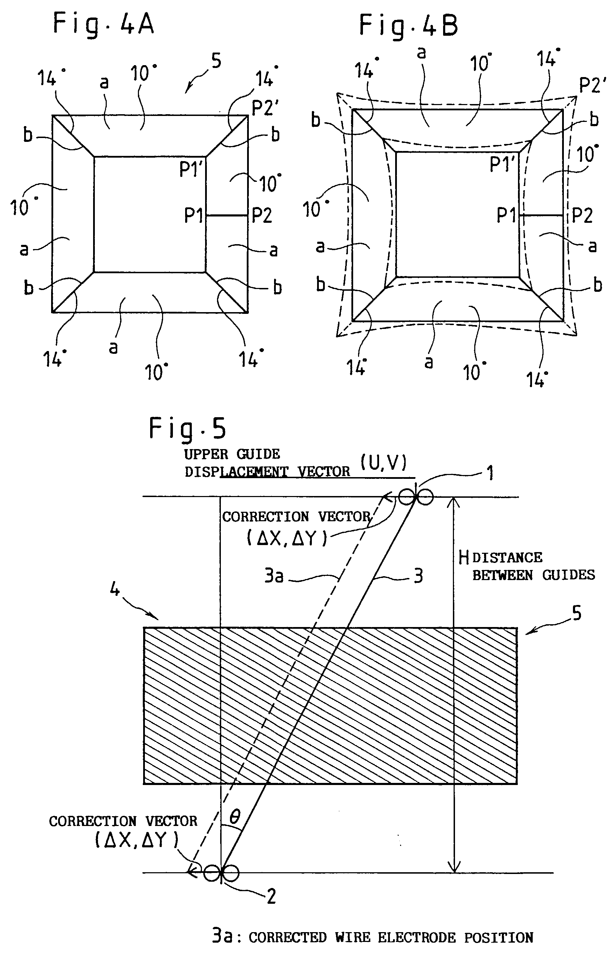

In Fig. 4A is illustrated an example of a product shape 5 formed as a square pyramid. In this example, the inclination relative to the vertical of the four faces a of the periphery of the square pyramid is 10 degrees, while the inclination of the wire 3 at the seams b between the four peripheral faces is approximately 14 degrees. Therefore, while moving the wire 3 from one seam b to the next seam b, the inclination of the wire 3 relative to the vertical must be changed from 14 degrees to 10 degrees, and must then be further changed to 14 degrees in a direction symmetrical with the first 14 degrees.

More specifically, when machining the middle segment of the face a in Fig. 4A, the inclination of the line segment P1-P2 corresponding to the path of the wire 3 is 10 degrees relative to the vertical, while the inclination of the line segment P1'-P2' corresponding to the path of the wire 3 when machining the seam b is 14 degrees. The appropriate offset amount L for the former case is given by $R/\cos(10°)$, and the appropriate offset amount L for the latter case is given by $R/\cos(14°)$. Thus these two values do not coincide, and it is evident that proper taper machining cannot be performed even when setting the offset amount L by the program block by block. The result is that beer barrel distortion occurs about the periphery of the part shape 5.

An object of the present invention, therefore, is to provide a wire discharge machining control device having an offset correction feature, wherewith the shortcomings of the prior art described in the foregoing are eliminated, and wherewith part shapes can be accurately reproduced according to the program, while continually maintaining appropriate offset amounts, even when performing taper machining while varying the angle of inclination of the wire.

In accordance with the present invention, offset variations in the horizontal plane are calculated based on perpendicular clearances between an upper wire guide and a lower wire guide and on horizontal wire movement commands, at prescribed drive control periods, and those variations are output superimposed on the horizontal wire movement commands.

Based on the present invention, part shapes can be accurately reproduced according to the program while maintaining appropriate offset amounts, even when performing taper machining while varying the attitude of the wire.

The invention will now be described by way of example and with reference to the accompanying drawings in which:

Fig. 1 is a block diagram of the main components in a discharge process control device in one embodiment of the present invention and in a wire electrical discharge machine wherein drive control is implemented by that control device;

Fig. 2 is a simplified flowchart of preprocess routines performed by the control device in the same embodiment;

Fig. 3 is a simplified flowchart of offset correction processing routines performed by the control device in the same embodiment;

Fig. 4A is a plan of a part shape formed as a square pyramid, seen from above;

Fig. 4B is a diagram indicating the locus of movement when machining the square pyramid illustrated in Fig. 4A using the device of the present invention;

Fig. 5 is a conceptual diagram of an example of offset correction;

Fig. 6 is a conceptual diagram of an example of an offset in wire discharge machining; and

Fig. 7 is a conceptual diagram of an example of an offset in wire discharge machining.

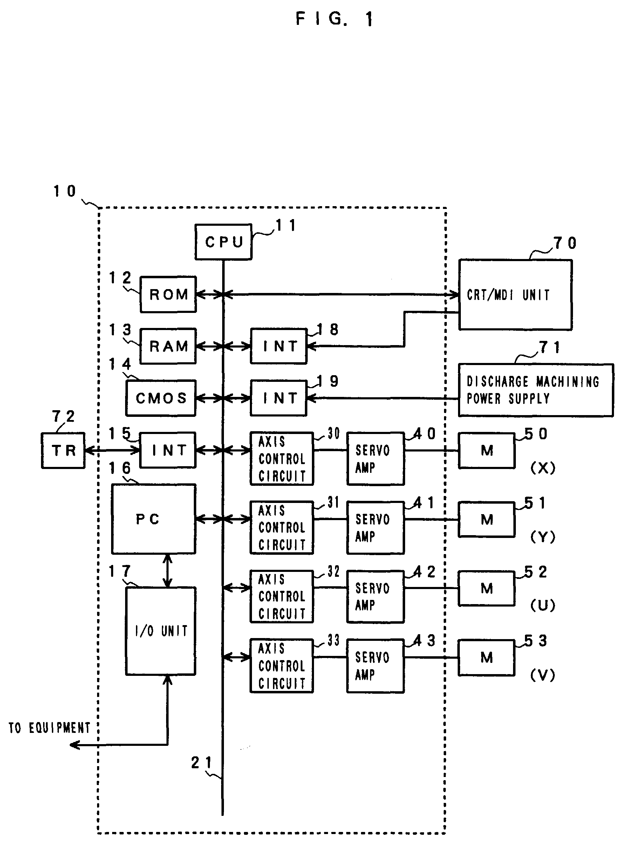

Embodiments of the present invention are now described with reference to the accompanying drawings. Fig. 1 is a block diagram of the main components in a discharge process control device 10 in one embodiment of the present invention and in a wire electrical discharge machine wherein drive control is implemented by that control device 10.

A processor 11 is a processor which exercises overall control over the control device 10, reading out system program data stored in a ROM 12 via a bus 21 and exercising overall control over the control device 10 according to the system program. Temporary computation data and display data, etc., are stored in a RAM 13. A CMOS memory 14, which is backed up by a battery (not shown in the drawings), is configured as a nonvolatile memory the contents of which are maintained intact even when the power is cut off to the control device 10.

An interface 15, which provides the interface with peripheral equipment, is connected to external equipment 72 such as a memory device. Machining programs are read in from the memory device, and it is also possible to output machining programs edited within the control device 10 to the external equipment 72.

A programmable controller 16 controls the wire electrical discharge machine with sequence programs built into the control device 10. In other words, in accordance with functions commanded by a machining program, signals required by the wire electrical discharge machine are converted to by the sequence programs, and output from an I/O unit 17 to the wire electrical discharge machine. These output signals manipulate various actuators in wire travel systems and so forth in the wire electrical discharge machine. The programmable controller 16 receives signals generated by various switches on a machine control panel and buffer limit switches in the wire electrical discharge machine, subjects them to necessary processing, and passes them on to the processor 11.

The current positions of the axes, alarms, parameters, and image data and other image signals are sent to the display unit of a manual data input device (CRT/MDI unit) 70 equipped with a display screen and displayed on the display device. An interface 18 receives offset amounts and other data from the keyboard of the CRT/MDI unit 70 and passes them to the processor 11. An interface 19 is connected to an electric discharge machining power supply 71 for receiving speed commands therefrom. This electric discharge machining power supply 71 monitors the wire and work discharge conditions and communicates speed commands, inclusive of forward and reverse commands, to the processor 11.

Axis control circuits 30 to 33 receive axis movement commands from the processor 11 and output axis commands to servo amplifiers 40 to 43. The servo amplifiers 40 to 43 receive these commands and drive servo motors 50 to 53 for the individual axes. The servo motors 50 to 53 for the X and Y and the U and V axes have built in pulse encoders for detecting position speeds. From these pulse encoders, feedback signals are fed back to the axis control circuits 30 to 33. Servo controlling CPUs built into the axis control circuits 30 to 33 perform routines, namely a position loop, a speed loop, and a current loop, based on the feedback signals and on the movement commands mentioned earlier, determine torque commands for each axis for final drive control, and control the positions and speeds of the servo motors 50 to 53 for the several axes.

The principle of correcting the offset amount in this embodiment is described next.

As already explained, an NC program automatically provides work movement quantities for performing the contour machining, that is, the horizontal table movement amounts along the X and Y axes, and the horizontal movement amounts of the upper wired guide or lower wire guide along the U and V axes for attaining taper angles. Therefore, if the perpendicular clearance H between the upper wire guide and lower wire guide is known, the angle of inclination of the wire at that point in time can easily be found.

Specifically, if we take H as the vertical clearance between the upper wire guide 1 and the lower wire guide 2 in Fig. 5, and (U, V) as the position of the upper wire guide 1 referenced to the lower wire guide 2, then the angle of inclination θ of the wire 3 at that time will be given by Equation 1 below.

$$\cos \theta = \frac{H}{\sqrt{U^2+V^2+H^2}} \qquad \text{Eq 1}$$

Furthermore, the value of the offset L in the horizontal dimension necessary in making the perpendicular clearance between the inclined surface 5 of the work and the wire 3 to be the designated offset R, when the angle of inclination of the wire 3 is θ, is given by L = R/cos θ, as indicated in Fig. 7. Therefore, the correction quantity ΔR necessary for the offset R in the horizontal dimension given by the program is found by the following equation.

$$\Delta R = L - R = [(1/\cos\theta)] \qquad \text{Eq 2}$$

$$= R\left(\frac{\sqrt{U^2+V^2+H^2}}{H} - 1\right)$$

Distributing this along the X and Y axes, the X-axis correction ΔX and the Y-axis correction ΔY, which is finally necessary, become the values indicated in Equations 3 and 4 below, oriented toward the outside of the machining shape 5, respectively.

$$\Delta X = \Delta R \frac{U}{\sqrt{U^2+V^2}} \qquad \text{Eq 3}$$

$$\Delta Y = \Delta R \frac{U}{\sqrt{U^2+V^2}} \qquad \text{Eq 4}$$

In other words, if, as illustrated in Fig. 5, the wire 3 is moved by ΔX and ΔY parallel to the X and Y axes, with the attitude thereof unchanged, from the position of the wire 3 as determined conventionally by the amount of horizontal table movement along the X and Y axes given by the program, the horizontal movement amounts U and V of either the upper guide 1 or lower guide 2 for attaining a taper angle, and the offset amount R, then that new position is the position that the wire 3 should be in.

In the example illustrated in Fig. 5, the work is fixed in place while the upper wire guide 1 and lower wire guide 2 are moved, but the correction method is the same in cases where either the upper wire guide 2 or the lower wire guide 2 is fixed in place, and machining is performed while moving the work 4. For example, in a case where the lower guide 2 is fixed, where the upper wire guide 1 is moved along the U and V axes to provide a taper angle, and machining is performed while moving the work 4, the method is the same, with only the directions of movement along the X and Y axes different. In this embodiment, it is assumed that the work 4 is fixed in place, that the upper wire guide 1, carried by the lower wire guide, is moved along the U and V axes to impart taper angles, and that machining is performed while driving the lower wire guide 2 along the X and Y axes.

A description is given now of the content of the correction processes actually performed by the control device 10. In wire discharge machining, moreover, in addition to complex taper machining, there are also cases where simple shapes such as rectangular parallelepipeds and cylindrical shapes are machined, as well as cases where rough taper machining is sufficient. In this embodiment, therefore, GOO commands to execute correction processing and GXX commands to terminate correction processing are used so that only those segments of NC programs bounded by a GOO and a GXX are subjected to offset correction processing based on the principle described in the foregoing.

It is possible, alternatively, to omit description of the GXX command, so that correction processing is executed for all of the program following a GOO command.

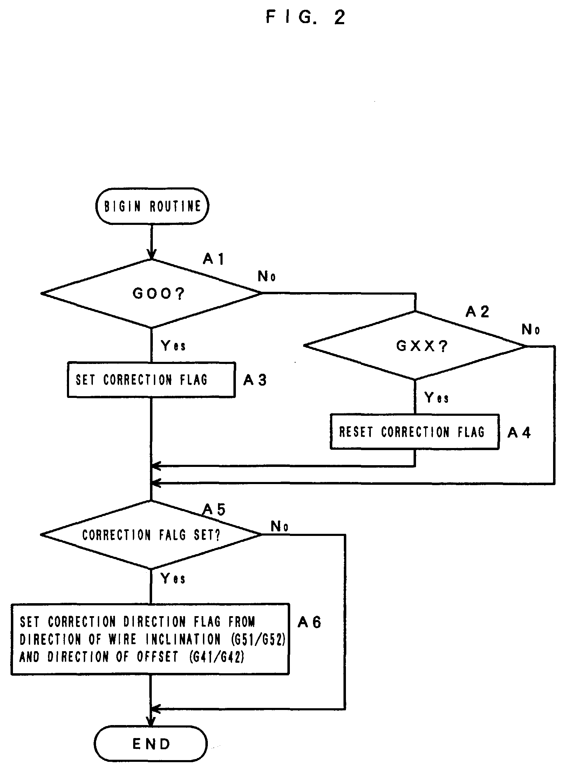

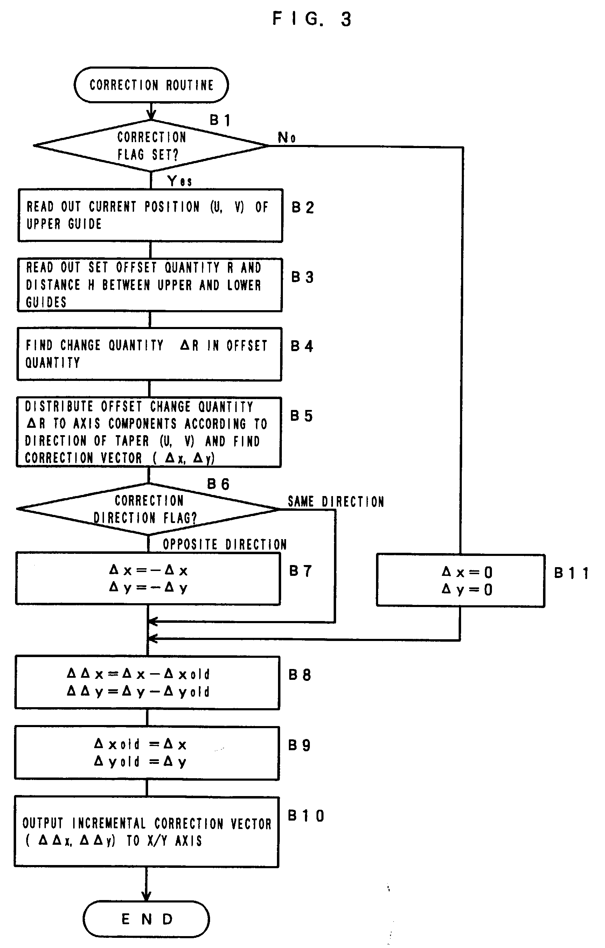

Fig. 2 is a flowchart indicating the main routines for preprocessing wherein the processor 11 reads in a program one block at a time, while Fig. 3 is a flowchart indicating the main routines for distributive processing for movement commands executed reiteratively every prescribed period, based on movement command data generated by the preprocessing. It should be noted that those preprocessing routines for calculating movement command data for horizontal movements along the U and V axes necessary for attaining the commanded angle of inclination θ given by a program, and those processing routines for calculating movement commands for each distribution period based on the movement command data, are the same as in the prior art, so that explanation of these are omitted here, where the description is more focused on the routines pertaining to the calculation and output of correction quantities.

The processor 11, having read in one block of a program in the preprocessing routines indicated in Fig. 2, first determines whether that block is a GOO command for beginning execution of correction processing (step A1), or a GXX command for terminating correction processing (step A2), or some other command or data. If that block is a GOO command, the processor 11 sets an offset correction enable flag (step A3), whereas if it is a GXX command, the offset correction enable flag is reset (step A4).

The processor 11 next determines whether or not the offset correction enable flag has been set (step A5). If the offset correction enable flag has been set, then the processor 11 sets the offset correction direction while referencing the direction of wire inclination and direction of offset indicated by the program commands (step A6).

If the G code currently being given as a command is G51, the direction of inclination is to the left relative to the direction of travel of the wire 3, whereas if it is G52, the direction of inclination is to the right. The direction of offset is to the left of the direction of travel of the wire with a command of G41, and to the right thereof with a command of G42. As a consequence, when codes of either G51 and G41, or G52 and G42 are given as commands, a correction vector is generated that moves the wire 3 in the same direction as the displacement vector for the upper wire guide 1 imparting a taper angle to the wire 3 according to the U and V axes. Conversely, when codes of either G51 and G42, or G52 and G41 are given as commands, a correction vector ($\Delta X$, $\Delta Y$) is generated in a direction opposite to that of the displacement vector for the upper wire guide 1.

When the offset correction enable flag is not set, the processing is altogether the same as in the prior art.

Meanwhile, the processor 11, having begun movement command distribution processing in the processing routines executed with a specified periodicity, as illustrated in Fig. 3, first determines whether or not the offset correction enable flag is set (step B1).

If the offset correction enable flag is not set, there is no need to implement real offset correction processing, so that the processor 11 initializes the $\Delta X$ and $\Delta Y$ values in the correction vector storage registers to zero (step B11).

The correction vector storage registers $\Delta X$ and $\Delta Y$ are registers for storing the correction values of $\Delta X$ and $\Delta Y$ indicated by Equations 3 and 4, respectively.

Next, the processor 11 subtracts the correction quantities $\Delta X_{old}$ and $\Delta Y_{old}$ calculated in the movement command distribution processing for the previous period from the correction quantities $\Delta X$ and $\Delta Y$ either calculated or initialized this time, finds the amount of increase in the correction quantity that should be output this distribution period, records these values in incremental correction quantity storage registers $\Delta\Delta X$ and $\Delta\Delta Y$ (step B8), and updates the values stored in the previous period correction quantity storage registers $\Delta X_{old}$ and $\Delta Y_{old}$ with the values of the correction quantities $\Delta X$ and $\Delta Y$ calculated this time (step B9).

Next, the processor 11 superimposes the values of the incremental correction movement commands $\Delta\Delta X$ and $\Delta\Delta Y$ of the distribution period at issue found in the step B8 routine on the incremental movement commands found by the same processing routines as in the prior art, that is, on the incremental movement commands for one period of horizontal movement in the X and Y axial directions as required to achieve the machining path given by the program, and distributively outputs these to the servo motors that drive the lower wire guide in the horizontal dimension (step B10).

As noted earlier, when the offset correction enable flag is not set, the $\Delta X$ and $\Delta Y$ values are always zero, but, in some cases, $\Delta X_{old}$ and $\Delta Y_{old}$ will contain the correction quantities calculated in the previous period. In those cases, an operation will be executed to cancel the correction.

When, on the other hand, the result of the determination in step B1 is true (yes), that is, when it is necessary to execute offset correction processing, the processor 11 first reads the values of U and V that are the currently commanded positions of the upper wire guide 1 with respect to the position of the lower wire guide 2, together with the perpendicular clearance H between the upper wire guide 1 and the lower wire guide 2 set at that point in time, and the offset R issued as a command by the program (steps B2 and B3). Then the processor 11 finds the value of the correction quantity $\Delta R$ based on Equation 2 (step B4) and calculates the values of the correction quantities $\Delta X$ and $\Delta Y$ along the X and Y axes using Equations 3 and 4, according to the values of U and V and the correction quantity $\Delta R$ (step B5).

The processor 11 next references the offset correction direction set in the preprocessing and determines whether or not this correction direction is the same as the direction of inclination (step B6).

When these directions are opposite, the processor 11 reverses the sign of the correction quantities $\Delta X$ and $\Delta Y$ calculated in the routine in step B5 to reverse the correction direction (step B7). When the directions are the same, the signs of the correction quantities $\Delta X$ and $\Delta Y$ are retained as calculated in the routine in step B5.

Having found the values of the correction quantities $\Delta X$ and $\Delta Y$ in this manner, the processor 11 subtracts the correction quantities $\Delta X_{old}$ and $\Delta Y_{old}$ of the previous period from the values of the correction quantities $\Delta X$ and $\Delta Y$ calculated in the routine of either step B5 or step B7, respectively, finds the values of the incremental correction movement commands $\Delta\Delta X$ and $\Delta\Delta Y$ that should be output this distribution period (step B8), updates the values in the previous period correction quantity storage registers $\Delta X_{old}$ and $\Delta Y_{old}$ with the values of the correction quantities $\Delta X$ and $\Delta Y$ calculated this time (step B9), and superimposes the values of the incremental correction movement commands $\Delta\Delta X$ and $\Delta\Delta Y$ for the distribution period at issue found by the routine in step B8 on the incremental movement commands found by the same processing as in the prior art, that is, on the incremental movement commands for one period for the horizontal movement quantity along the X and Y axes required to achieve the machining path given by the program, and distributively outputs these to the servo motors that drive the lower wire guide in the horizontal dimension (step B10).

In this embodiment, a configuration is described wherein the work is fixed in place, the lower wire guide is driven along the X and Y axes, and machining is performed while moving the upper wire guide, carried by the lower wire guide, along the U and V axes to impart a taper angle. However, in a configuration wherein the work is fixed and the upper and lower wire guides can move independently, correction vectors $\Delta x$ and $\Delta y$ can also be output to the U and V axes.

Thereafter, as a result of executing the offset correction processing illustrated in Fig. 3 reiteratively in every movement command distribution period, the change $\Delta R$ in the offset quantity in the horizontal dimension caused by the angle of inclination of the wire 3 is automatically corrected by $\Delta \Delta X$ and $\Delta \Delta Y$, the offset distance from the inclined face of the part shape 5 to the wire 3 is always maintained at the set value R, and precision wire discharge machining is thus performed without either cutting in too much or leaving excess material.

Taking the example of finishing the peripheral surfaces of a part shaped as a square pyramid, an example of a wire guide path is indicated by the broken lines in Fig. 4B for the case where the offset correction processing illustrated in Fig. 3 has been performed.

In this example, the four faces *a* of the periphery of the square pyramid are inclined an angle of 10 degrees relative to the Z axis, while the seams *b* of the four peripheral are inclined at an approximately 14 degrees. Therefore, while moving the wire 3 from one seam *b* to the next seam *b*, the inclination of the wire 3 relative to the Z axis must be changed from 14 degrees to 10 degrees, and then to 14 degrees in a direction symmetrical with the first 14 degrees.

If the correction processing illustrated in Fig. 3 is not performed, that is, if taper machining is performed according to the prior art and the offset quantity in the horizontal dimension is fixed at R or R/cos (10°) or R/cos (14°) , then the perpendicular clearance from the inclined surface of the peripheral faces *a* to the wire 3 will decrease the more as the inclination of the wire 3 increases. Therefore, in a part that is supposed to be a square pyramid, excessive cutting in will occur in an electric discharge machining where the wire 3 command angle of inclination is larger, that is, in the vicinity of the seams *b*, resulting in beer barrel distortion. When, however, the offset correction control illustrated in Fig. 3 is performed, the perpendicular clearance from the inclined surface of the peripheral faces *a* to the wire 3 is automatically corrected, according to the attitude of the wire 3, so that it remains at the set offset quantity R, so that an accurate, distortion-free square pyramid shape can be obtained.

As a result, the locus of movement of the wire 3 itself describes a spool shape, as illustrated in Fig. 4B, but this is the correct path for the wire 3.

**Claims**

1. A wire discharge machining control device having an offset correction feature, comprising:

   horizontal feed means for moving work horizontally relative to a wire; and
   wire inclination means for imparting an inclination to said wire by moving an upper wire guide or a lower wire guide in the horizontal dimension; wherein:
   said horizontal feed means and said wire inclination means are drivingly controlled based on the horizontal work movement command obtained by analyzing the machining program and the horizontal wire movement command and taper machining is performed on said work; characterized in that:
   offset change quantities in the horizontal plane are calculated on the basis of said horizontal wire movement commands and perpendicular clearance between said upper wire guide and said lower wire guide; and
   said change quantities so calculated are superimposed on said horizontal work movement commands and output.

2. A wire discharge machining control method comprising:

   an X axis and a Y axis that generate relative movements between a machining table and a first wire guide in an X-Y plane; and
   a U axis and a V axis that cause a second wire guide to move relative to said first wire guide in a U-V plane that is parallel to said X-Y plane; characterized by comprising the steps of:
   finding, once every set control period, from the command positions of said two wire guides, direction of inclination and angle of inclination of a wire electrode supported by said two wire guides in three-dimensional space formed by said U axis, said V axis, and an axis perpendicular to said U and V axes;
   calculating actual offset quantities for said wire electrode in said X-Y plane, based on directions of inclination and angles of inclination of the wire electrode so found;
   distributing offset change quantities, that are the differences between said calculated offset quantities and a reference offset quantity issued as a command, into an X-axis component and a Y-axis component according to said direction of inclination of said wire electrode; and
   imparting said X-axis component and Y-axis component of said offset change quantities to said X axis and Y axis so that they are superimposed on relative movement commands for relative movement between said machining table and one of said wire guides.

FIG. 1

F I G. 2

BIGIN ROUTINE

A1
GOO?  — No →  A2
GXX? — No →
|
Yes
↓
SET CORRECTION FLAG   A3

GXX? Yes ↓
RESET CORRECTION FLAG   A4

A5
CORRECTION FALG SET?  — No →
|
Yes
↓
SET CORRECTION DIRECTION FLAG FROM   A6
DIRECTION OF WIRE INCLINATION (G51/G52)
AND DIRECTION OF OFFSET (G41/G42)

END

## FIG. 3

```
        ( CORRECTION ROUTINE )
                  |
                  v                    B1
            < CORRECTION >  ──No──────────────────┐
            < FLAG SET? >                          │
                  |                                │
                 Yes                               │
                  v                                │
    ┌─────────────────────────────────┐ B2        │
    │ READ OUT CURRENT POSITION (U, V) OF │        │
    │ UPPER GUIDE                      │           │
    └─────────────────────────────────┘           │
                  |                                │
                  v                                │
    ┌─────────────────────────────────┐ B3        │
    │ READ OUT SET OFFSET QUANTITY R AND │         │
    │ DISTANCE H BETWEEN UPPER AND LOWER │         │
    │ GUIDES                           │           │
    └─────────────────────────────────┘           │
                  |                                │
                  v                                │
    ┌─────────────────────────────────┐ B4        │
    │ FIND CHANGE QUANTITY  ΔR IN OFFSET │         │
    │ QUANTITY                         │           │
    └─────────────────────────────────┘           │
                  |                                │
                  v                                │
    ┌─────────────────────────────────┐ B5        │
    │ DISTRIBUTE OFFSET CHANGE QUANTITY │          │
    │ ΔR TO AXIS COMPONENTS ACCORDING TO │         │
    │ DIRECTION OF TAPER (U, V) AND FIND │         │
    │ CORRECTION VECTOR ( Δx, Δy)      │           │
    └─────────────────────────────────┘           │
                  |            B6                  │
                  v                                │
            < CORRECTION >  ── SAME DIRECTION ──┐  │
            < DIRECTION FLAG? >                 │  │
                  |                             │  │
          OPPOSITE DIRECTION                    │  │
                  v                             │  │
    ┌─────────────────────────┐ B7   ┌──────────────────┐ B11
    │      Δx = −Δx           │       │    Δx = 0       │
    │      Δy = −Δy           │       │    Δy = 0       │
    └─────────────────────────┘       └──────────────────┘
                  |←──────────────────────┘            │
                  |←────────────────────────────────────┘
                  v
    ┌─────────────────────────┐ B8
    │    ΔΔx = Δx − Δxold     │
    │    ΔΔy = Δy − Δyold     │
    └─────────────────────────┘
                  |
                  v
    ┌─────────────────────────┐ B9
    │    Δxold = Δx           │
    │    Δyold = Δy           │
    └─────────────────────────┘
                  |
                  v
    ┌─────────────────────────────────┐ B10
    │ OUTPUT INCREMENTAL CORRECTION VECTOR │
    │ ( ΔΔx, ΔΔy) TO X/Y AXIS         │
    └─────────────────────────────────┘
                  |
                  v
             (  END  )
```

## Fig.4A

## Fig.4B

## Fig.5

UPPER GUIDE DISPLACEMENT VECTOR (U,V)

CORRECTION VECTOR (ΔX,ΔY)

H DISTANCE BETWEEN GUIDES

CORRECTION VECTOR (ΔX,ΔY)

3a : CORRECTED WIRE ELECTRODE POSITION

Fig.6

Fig.7

$$L = R/\cos\theta$$